# EUROPEAN PATENT SPECIFICATION

(11) **EP 3 181 267 B1**
(45) Date of publication and mention of the grant of the patent: **11.08.2021**
(21) Application number: 14899797.6
(22) Date of filing: 26.08.2014
(51) Int. Cl.: C03C 27/00

(54) **METHOD FOR INTEGRALLY FORMING NON-METAL PART AND METAL PART**
VERFAHREN ZUR INTEGRALEN FORMUNG EINES METALLFREIEN TEILS UND EINES METALLTEILS
PROCÉDÉ POUR FORMER D'UN SEUL TENANT UNE PIÈCE NON MÉTALLIQUE, ET PIÈCE MÉTALLIQUE CORRESPONDANTE

(30) Priority: 14.08.2014 CN 201410401389
(43) Date of publication of application: 21.06.2017
(73) Proprietor: Dongguan Revolution Product Design Co., Ltd, Dongguan, Guangdong 523660 (CN)
(72) Inventor: LI, Lugee, Dongguan Guangdong 523660 (CN)
(74) Representative: Niburska, Danuta
(86) International application number: PCT/CN2014/085137
(87) International publication number: WO 2016/023245

(56) References cited:
- WO-A1-2013/023606
- WO-A2-2013/162504
- CN-A- 1 262 248
- CN-A- 102 430 745
- CN-A- 103 008 615
- DE-U1-202005 014 408
- US-A- 5 237 486
- US-A1- 2003 087 198
- US-A1- 2009 017 263
- None

## Description

The invention relates to a method for integrating a non-metal part with a metal part.

Conventionally, frames of electronic equipment including mobile phones and tablet computers use alloy material. The metal frames formed by alloy material have a better appearance and can protect the fragile panel or backplane of the electronic equipment. Specifically, the panel, backplane, or plastic component of the electronic equipment is embedded in a processed metal frame, and then the metal frame is assembled with a corresponding part. However, the assembly method leaves certain gaps between the metal frame and the panel or backplane of the electronic product, and the assembly gaps cannot be eliminated completely even using precision machining.

Chinese Patent No. CN101815594 discloses a method for imbedding a glass insert in a metal frame and electronic equipment prepared using the method. The method includes placing a metal frame on the surface or the edge of a transparent component using a metal modeling process. To be specific, the transparent component is placed in the chamber of a mold. Liquid metal is poured into the chamber, and when the metal is cooled, a metal frame is formed on the surface or the edge of the transparent component. By using the method, the assembly gaps are eliminated, and the transparent component is integrated with the metal frame. However, during operation, the metal requires heating, casting, and cooling quickly, which involves a complex process, and the product yield is low. The above patent also discloses a method for shaping metal powders at the edge of a transparent component using a Metal Injection Molding (MIM) process. Specifically, the metal powders are shaped at the edge of the transparent component using a high-temperature sintering process. The metal frame formed by high-temperature sintering process has relatively loose interior structure, which is unfavorable to subsequent surface treatments including polishing, oxidization, and electroplating, and the appearance of the electronic product leaves much to be desired. In addition, WO 2013/162504A2 discloses a method for creating an integral assembly by molding amorphous metal alloy to a transparent member in a thermoplastic state. The method of WO 2013/162504A2 includes the steps of heating the amorphous metal alloy to above its glass transition temperature; wrapping the heated amorphous metal alloy around the transparent member; applying pressure to the heated bulk amorphous metal alloy and the transparent member to band and join the amorphous metal alloy around and onto the transparent member so as to form a seamless joint between the amorphous metal alloy and the transparent member; and extruding and cooling the seamless joint between the amorphous metal alloy and the transparent member. The method of WO 2013/162504 A2 is not conducted under vacuum. In addition, WO 2013/023606 A1 discloses a method for joining an amorphous alloy material to a heterogeneous material. The method of WO 2013/023606 A1 includes placing into a mold a pre-formed piece of either an amorphous alloy material or a heterogeneous material; heating the other material to a melt material having a pre-determined temperature; pouring the melt material into the mold to come into contact with the pre-formed piece; and cooling the melt material and the pre-formed piece to obtain a composite of the amorphous alloy material and the heterogeneous material. The method of WO 2013/023606 A1 is not conducted under vacuum and does not address oxidation of the amorphous alloy material.

In view of the above-described problems, it is one objective of the invention to provide a method for integrating a non-metal part with a metal part. The method is easy to operate, has high product yield, and facilitates the surface treatment of the metal part.

To achieve the above objective, in accordance with the invention, there is provided the method for integrating a non-metal part with a metal part, the method comprising:
1) placing a transparent non-metal part in a mold;
2) placing a metal part in the mold along an edge of the non-metal part, the metal part being a continuous structure along the edge of the non-metal part;
3) under vacuum, heating the metal part, and transforming the metal part into a semi-solid metal limited in a chamber of the mold;
4) under vacuum, extruding the semi-solid metal using the mold, the semi-solid metal being seamlessly secured to the edge of the non-metal part; and
5) under vacuum, quick cooling the semi-solid metal on the edge of the non-metal part, the semi-solid metal being transformed into amorphous metal seamlessly secured to the edge of the non-metal part.

In a class of this embodiment, the metal part is aluminum magnesium alloy, aluminum copper alloy, aluminum nickel alloy, zirconium alloy, or titanium alloy.

In a class of this embodiment, the edge of the non-metal part is provided with a clamping structure.

In a class of this embodiment, the clamping structure is a groove or a lug boss on the edge of the non-metal part.

In a class of this embodiment, a thermal expansion coefficient of the metal part is greater than or equal to a thermal expansion coefficient of the non-metal part.

In a class of this embodiment, prior to 3), a buffer is disposed between the metal part and the non-metal part. The buffer is a continuous structure along the edge of the non-metal part.

In a class of this embodiment, the non-metal part is glass or sapphire.

Advantages of the method according to embodiments of the invention are summarized as follows:

Compared with the method in the prior art, the method in the embodiments of the invention uses a hot pressing process, and the metal part is integrated on the edge of the opaque non-metal part. The method is easy to operate, and has high product yield. The pressed metal part features relatively high density and intensity. In addition, the method facilitates the surface treatment of the metal part.
FIG. 1 is a flow chart of a method for integrating a non-metal part with a metal part in accordance with one embodiment of the invention; and
FIG. 2 is a schematic diagram of a mold used in a method for integrating a non-metal part with a metal part in accordance with one embodiment of the invention.

For further illustrating the invention, experiments detailing a method for integrating a non-metal part with a metal part are described below.

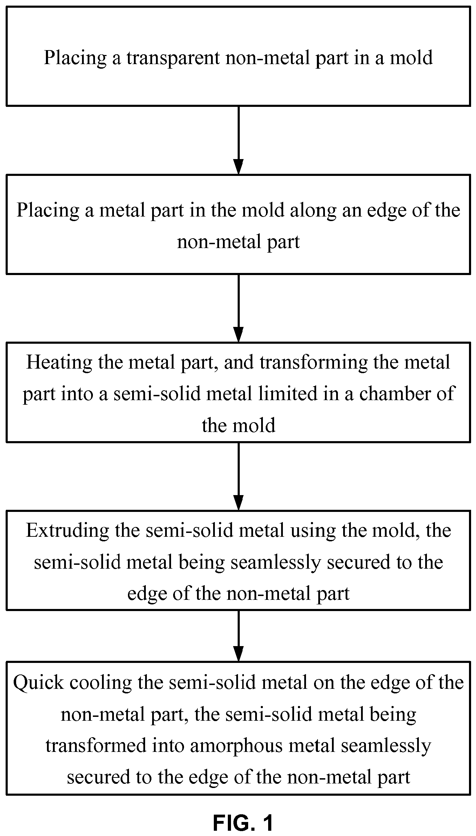

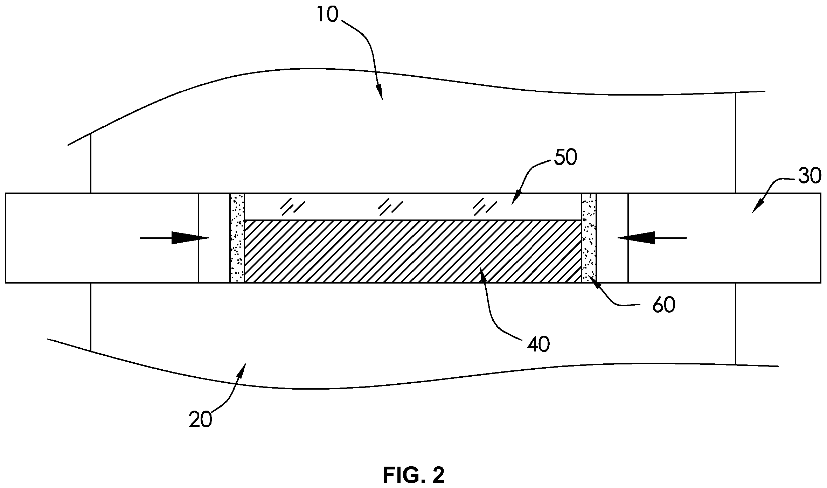

As shown in FIG. 1, the method for integrating the non-metal part with the metal part is provided in the example of the invention. The method is used for integrating a glass plate 50 and a metal frame 60 to form an integrated component. The integrated component is used as a part of electronic products. The glass plate 50 is used as a screen plane glass or a backplane glass of the electronic products, and the metal frame 60 is used as a metal frame on an edge of the electronic products. The method comprises the following steps:
1) The glass plate 50 is placed in a chamber of a mold shown in FIG. 2. Specifically, the glass plate 50 is disposed in a mold core unit 40 on a parting surface of a fixed half 20. The size of the mold core unit 40 is corresponding to that of the glass plate 50. After the glass plate is disposed on the mold core unit, an edge of the glass plate 50 is aligned with an edge of the mold core unit 40.
2) The metal frame 60 is placed in the mold and on the edge of the glass plate 50. The metal frame 60 forms a continuous structure along the edge of the glass plate 50. Thereafter, a moving half 10 presses downwards, and the metal frame 60 surrounds the edges of the glass plate 50 and the mold core unit 40. A mold closing unit 30 which is on the edge of the parting surface is moved so as to enclose the chamber of the mold. The metal frame 60 is fixed at the edge of the chamber of the mold. Certain movable distance of the mold closing unit 30 is ensured, so as to avoid large extrusion force on the glass plate 50 caused by the metal frame 60 during lateral heating.
3) The metal frame 60 is heated. Preferably, the metal frame 60 is aluminum magnesium alloy. The metal frame 60 is heated by a heating apparatus, and is converted to be semi-solid metal. Due to the thermal expansion of the metal frame 60, the metal frame presses the mold closing unit 30 outwards, and the mold closing unit 30 moves away from the chamber of the mold. As the metal frame 60 is not thick, the displacement of the mold closing unit 30 caused by the thermal expansion is small. Optionally, the displacement of the mold closing unit 30 caused by thermal expansion is calculated according to the thickness of the metal frame 60, the thermal expansion coefficient, and the heating temperature, etc., so that a spacing mechanism can be provided for the mold closing unit 30 according to the calculated displacement.
4) The mold closing unit 30 is pressed towards the chamber of the mold by a hydraulic cylinder or other mechanisms, so that the semi-solid metal frame 60 shrinks to the edge of the glass plate 50, ensuring the semi-solid metal frame 60 to be seamlessly secured to the edge of the glass plate 50. The pressing force on the mold closing unit 30 is kept.
5) As the pressing force on the mold closing unit 30 is kept, refrigerant is transmitted through the cooling channel of the mold by the cooling device to the semi-solid metal frame 60, so that the semi-solid metal frame is quickly cooled. During the quick cooling of the semi-solid metal frame 60, the interior atoms of the alloy has no enough time to crystallize orderly, thus the solid amorphous alloy having a disordered structure is prepared. Finally, the metal frame 60 is molded into the metal frame 60 made of amorphous alloy on the edge of the glass plate 50. After separating from the mold, an integrated component integrating the metal frame 60 and the glass plate 50 is prepared.

In the above method, 3), 4), 5) are conducted under vacuum environment to avoid oxidation of the metal frame 60 under high temperatures. Specifically, following 2), the air in the chamber of the mold is exhausted by an external vacuum device.

The integrated component prepared by the above method can be applied to the electronic products having a glass back plate and a metal frame. The glass plate 50 can also be used as a glass plane of display screens of mobile phones and tablet computers, that is to say, the method can integrate a metal frame and a glass plane of display screens.

As the integrated component is applied to the electronic products, after separating from the mold, the integrated component needs to be polished, plated, oxidized, etc. In the above method, the metal frame 60 is processed using a semi-solid metal technique, and the metal frame 60 features a dense interior structure and high intensity, thus laying a favorable foundation for the surface treatments such as polish, plating, oxidization, etc.

In the example, favorably, the metal frame 60 is aluminum copper alloy, aluminum nickel alloy, zirconium alloy, or titanium alloy. Other metal materials that can be used for preparing the metal frame 60 of the electronic products are optional.

The edge of the glass plate 50 is provided with a clamping structure to increase the bonding intensity. Specifically, the clamping structure is a groove formed by extending the edge of the glass plate 50. While the semi-solid metal frame 60 is extruded, part of the inner surface forms a structure embedding in the groove. Optionally, the clamping structure is a lug boss formed by extending the edge of the glass plate 50. While the semi-solid metal frame 60 is extruded, the metal frame experiences deformation so as to clamp the lug boss.

In selecting the materials, a metal frame 60 which has a thermal expansion coefficient larger than or equal to a thermal expansion coefficient of the glass plate 50 is preferable, therefore, when the metal frame 60 is heated, the thermal expansion of the glass plate 50 can be effectively controlled, and the adverse influence of the temperature on the glass plate 50 is reduced. Optionally, the glass plate 50 can be replaced by sapphire or other transparent components; actually, as a component of electronic products, any material suitable for manufacturing backplanes or planes of electronic products can be applied to the method of the invention.

In the example, prior to 3), a buffer is disposed between the metal frame 60 and the edge of the glass plate 50. The buffer is a continuous structure along the edge of the glass plate 50. Optionally, the buffer can be a component which works to facilitate the integration of the glass plate 50 and the metal frame 60; or the buffer is an elastic component, for example, the buffer is 65Mn. The buffer which is made of 65Mn features favorable elasticity, therefore, as the buffer is disposed in the integrated component comprising the metal frame 60 and the glass plate 50, the buffer can buffer the impact force and effectively protect the glass plate 50 when the electronic product falls down and the metal frame 60 faces the impact force.

The method in the example of the invention is also applicable for other integration of a metal part with a transparent non-metal part such as ceramic. However, no matter what the method is applied, the steps are mostly the same as those in the method in the example of the invention, and no need to be illustrated here.

## Claims

1. A method for integrating a non-metal part with a metal part, the method comprising:
1) placing a transparent non-metal part (50) in a mold;
2) placing a metal part (60) in the mold along an edge of the non-metal part, the metal part (60) being a continuous structure along the edge of the non-metal part (50);
3) under vacuum, heating the metal part (60), and transforming the metal part (60) into a semi-solid metal (60) limited in a chamber of the mold;
4) under vacuum, extruding the semi-solid metal (60) using the mold, the semi-solid metal (60) being seamlessly secured to the edge of the non-metal part (50); and
5) under vacuum, cooling the semi-solid metal (60) on the edge of the non-metal part (50), the semi-solid metal (60) being transformed into amorphous metal (60) seamlessly secured to the edge of the non-metal part (50).

2. The method of claim 1, **characterized in that** the metal part (60) is aluminum magnesium alloy, aluminum copper alloy, aluminum nickel alloy, zirconium alloy, or titanium alloy.

3. The method of claim 1, **characterized in that** the edge of the non-metal part (50) is provided with a clamping structure.

4. The method of claim 3, **characterized in that** the clamping structure is a groove or a lug boss on the edge of the non-metal part (50).

5. The method of claim 1, **characterized in that** a thermal expansion coefficient of the metal part (60) is greater than or equal to a thermal expansion coefficient of the non-metal part (50).

6. The method of claim 1, **characterized in that** prior to 3), a buffer is disposed between the metal part (60) and the non-metal part (50); and the buffer is a continuous structure along the edge of the non-metal part (50).

7. The method of claim 1, **characterized in that** the non-metal part (50) is glass or sapphire.

## Patentansprüche

1. Verfahren zum Einfügen eines nichtmetallischen Teils in ein metallisches Teil, wobei das Verfahren Folgendes umfasst:
1) Platzieren eines transparenten nichtmetallischen Teils (50) in einer Form;
2) Platzieren eines metallischen Teils (60) in der Form entlang eines Rands des nichtmetallischen Teils, wobei das metallische Teil (60) eine durchgehende Struktur entlang des Rands des nichtmetallischen Teils (50) ist;
3) unter Vakuum, Erwärmen des metallischen Teils (60) und Umwandeln des metallischen Teils (60) in ein halbfestes Metall (60), das in einer Kammer der Form eingeschränkt ist;
4) unter Vakuum, Extrudieren des halbfesten Metalls (60) unter Verwendung der Form, wobei das halbfeste Metall (60) nahtlos am Rand des nichtmetallischen Teils (50) angebracht ist; und
5) unter Vakuum, Abkühlen des halbfesten Metalls (60) am Rand des nichtmetallischen Teils (50), wobei das halbfeste Metall (60) in ein amorphes Metall (60) umgewandelt wird, das nahtlos an den Rand des nichtmetallischen Teils (50) angebracht ist.

2. Verfahren nach Anspruch 1, **dadurch gekennzeichnet, dass** das metallische Teil (60) eine Aluminum-Magnesium-Legierung, eine Aluminum-Kupfer-Legierung, eine Aluminum-Nickel-Legierung, eine Zirkoniumlegierung oder eine Titanlegierung ist.

3. Verfahren nach Anspruch 1, **dadurch gekennzeichnet, dass** der Rand des nichtmetallischen Teils (50) mit einer Klemmstruktur versehen ist.

4. Verfahren nach Anspruch 3, **dadurch gekennzeichnet, dass** die Klemmstruktur eine Furche oder eine Befestigungsnabe am Rand des nichtmetallischen Teils (50) ist.

5. Verfahren nach Anspruch 1, **dadurch gekennzeichnet, dass** ein Wärmeausdehnungskoeffizient des metallischen Teils (60) größer oder gleich einem Wärmeausdehnungskoeffizient des nichtmetallischen Teils (50) ist.

6. Verfahren nach Anspruch 1, **dadurch gekennzeichnet, dass** vor 3) ein Puffer zwischen dem metallischen Teil (60) und dem nichtmetallischen Teil (50) angeordnet ist; und der Puffer eine durchgehende Struktur entlang des Rands des nichtmetallischen Teils (50) ist.

7. Verfahren nach Anspruch 1, **dadurch gekennzeichnet, dass** das nichtmetallische Teil (50) Glas oder Saphir ist.

## Revendications

1. Procédé pour l'intégration d'une partie non-métallique avec une partie métallique, le procédé comprenant :
1) la disposition d'une partie non-métallique transparente (50) dans un moule ;
2) la disposition d'une partie métallique (60) dans le moule le long d'un bord de la partie non-métallique, la partie métallique (60) étant une structure continue le long du bord de la partie non-métallique (50) ;
3) sous vide, le chauffage de la partie métallique (60), et la transformation de la partie métallique (60) en un métal semi-solide (60) limité dans une chambre du moule ;
4) sous vide, l'extrusion du métal semi-solide (60) à l'aide du moule, le métal semi-solide (60) étant fixé sans soudure au bord de la partie non-métallique (50) ; et
5) sous vide, le refroidissement du métal semi-solide (60) sur le bord de la partie non-métallique (50), le métal semi-solide (60) étant transformé en un métal amorphe (60) fixé sans soudure au bord de la partie non-métallique (50).

2. Procédé selon la revendication 1, **caractérisé en ce que** la partie métallique (60) est un alliage de magnésium-aluminium, un alliage de cuivre-aluminium, un alliage de nickel-aluminium, un alliage de zirconium ou un alliage de titane.

3. Procédé selon la revendication 1, **caractérisé en ce que** le bord de la partie non-métallique (50) est doté d'une structure de serrage.

4. Procédé selon la revendication 3, **caractérisé en ce que** la structure de serrage est une rainure ou bossage de patte sur le bord de la partie non-métallique (50).

5. Procédé selon la revendication 1, **caractérisé en ce qu'**un coefficient d'expansion thermique de la partie métallique (60) est supérieur ou égal à un coefficient d'expansion thermique de la partie non-métallique (50).

6. Procédé selon la revendication 1, **caractérisé en ce qu'**avant l'étape 3), un tampon est disposé entre la partie métallique (60) et la partie non-métallique (50) ; et le tampon est une structure continue le long du bord de la partie non-métallique (50).

7. Procédé selon la revendication 1, **caractérisé en ce que** la partie non-métallique (50) est du verre ou du saphir.
